Europäisches Patentamt

European Patent Office

Office européen des brevets

(11) Veröffentlichungsnummer: **0 279 877**
**A1**

# EUROPÄISCHE PATENTANMELDUNG

(21) Anmeldenummer: 87102535.9

(22) Anmeldetag: 23.02.87

(51) Int. Cl.⁴: **B23D 29/02** , B25B 7/00

Die Bezeichnung der Erfindung wurde geändert (Richtlinien für die Prüfung im EPA, A-III, 7.3).

(43) Veröffentlichungstag der Anmeldung:
**31.08.88 Patentblatt 88/35**

(84) Benannte Vertragsstaaten:
**AT BE CH DE ES FR GB IT LI LU NL SE**

(71) Anmelder: **Zelger, Franz**
**Wiedenfeldweg 5/f**
**I-39050 Deutschnofen Bozen(IT)**

(72) Erfinder: **Zelger, Franz**
**Wiedenfeldweg 5/f**
**I-39050 Deutschnofen Bozen(IT)**

(74) Vertreter: **Lauw, Rudolf C. W.**
**Patentanwälte Dr. Solf & Zapf**
**Zeppelinstrasse 53**
**D-8000 München 80(DE)**

(54) **Kombinationszange.**

(57) Die Erfindung bezieht sich auf eine Vorrichtung zum Schneiden von Bolzen und Metallbändern mit zwei durch einen Verbindungsbolzen (3) schwenkbar miteinander verbundenen Zangenhälften (11,12) mit jeweils einem Griffteil (1,2) und einem eine Schneidkante (5,6) aufweisenden Schneidbacken (9,10), wobei die beiden Schneidbacken (9,10) von der Achse (8) des Verbindungsbolzens (30) jeweils unterschiedlich weit entfernt und bei Gebrauch in den Bewegungsrichtungen (X,Y) derart aneinander vorbeiführbar sind, daß sich ihre beiden einander zugewandt angeordneten und sich gegenseitig berührenden Schneidkanten (5,6) scherenartig aneinander vorbeibewegen. In einer weiteren Ausführungsform der erfindungsgemäßen Vorrichtung ist die Schneidbacke im Bereich ihrer Schneidkante in deren Verlaufsrichtung etwa auf halber Länge derart unterteilt, daß eine Hälfte als Schneidkante ausgebildet ist, während die andere Hälfte als Halte-, Zieh-, Biege-oder Bindekante, welche möglichst nicht schneiden soll, ausgebildet ist. Diese Ausbildungsform der Erfindung integriert sowohl ein effektives Schneidwerkzeug als auch ein handliches Halte-, Zieh-, Biege-oder Bindewerkzeug in einem einzigen Werkzeug.

FIG.1

## Vorrichtung zum Schneiden von Blechen, Nägeln, Kabien, Bolzen, Drähten, Stahlseilen od. dgl. und ggf. zum Binden, Ziehen, Flechten oder Halten von Drähten

Die Erfindung bezieht sich auf eine Vorrichtung zum Schneiden von Blechen, Nägeln, Kablen, Bolzen, Drähten, Stahlseilen od. dgl. und gegebenenfalls zum Binden, Biegen, Ziehen oder Halten von Drähten mit zwei durch einen Verbindungsbolzen - schwenkbar miteinander verbundenen Zangenhälften mit jeweils einem Griffteil und einem eine Schneidkante aufweisenden Schneidbacken.

Vorrichtungen dieser Art sind in Form von sogenannten "Kneif-" oder "Beißzangen" bekannt. Diese Zangen weisen jeweils keilförmige, bei Gebrauch frontal aufeinander zu bewegte Schneiden auf, die den Werkstoff auseinanderkeilen. Dabei muß viel Kraft aufgewandt werden. Metallbänder kann man mit herkömmlichen Zangen überhaupt nicht zerteilen oder bearbeiten.

Der Erfindung liegt daher die Aufgabe zugrunde, eine Vorrichtung eingangs genannter Art zu schaffen, die eine wesentlich leichtere Durchtrennung von Bolzen gestattet und die ein Abschneiden von Metallbändern erst ermöglicht.

Diese Aufgabe wird gemäß der Erfindung dadurch gelöst, daß die beiden Schneidbacken von der Achse des Verbindungsbolzens jeweils unterschiedlich weit entfernt und bei Gebrauch in den Bewegungsrichtungen derart aneinander vorbeiführbar sind, daß sich ihre beiden einander zugewandt angeordneten und sich gegenseitig berührenden Schneidkanten scherenartig aneinander vorbeibewegen.

Erfinderische Weiterbildungen und vorteilhafte Ausgestaltungen ergeben sich aus den Kennzeichen der anliegenden Unteransprüche.

Bei der erfindungsgemäßen Vorrichtung ist der von ihrem Benutzer aufzubringende Kraftaufwand auf bis zu 40 % des bisher üblichen Kraftaufwandes reduziert, ohne daß irgendeine Übersetzung im Werkzeug vorhanden ist.

Durch die schräge Anordnung der Schneidkanten der erfindungsgemäßen Vorrichtung ist es möglich, auch Metallbänder und Bleckränder ein- und/oder abzuschneiden.

Eine bevorzugte Ausführungsform des Erfindungsgegenstandes ist in der in der Anlage beigefügten Zeichnung bildlich dargestellt und wird nachfolgend beschrieben.

Die Zeichnung zeigt:

Fig. 1 eine Vorderansicht der erfindungsgemäßen Vorrichtung;

Fig. 2 eine Seitenansicht der Vorrichtung gemäß Fig. 1;

Fig. 3 eine Draufsicht auf die Vorrichtung gemäß Fig. 1; und

Fig. 4 einen Exzenterbolzen als Verbindungsbolzen für die beiden Hälften der Vorrichtung gemäß Fig. 1;

Fig. 5 eine Vorderansicht einer weiteren Ausführungsform der erfindungsgemäßen Vorrichtung;

Fig. 6 eine Rückansicht der Vorrichtung gemäß Fig. 5 und

Fig. 7 eine Draufsicht auf die Vorrichtung gemäß den Fig.5,6.

Die erfindungsgemäße Vorrichtung ist im wesentlichen eine Zange, die wie üblich zwei Zangenhälften 11 und 12 mit jeweils einem Griffteil 1 und 2 und jeweils einem Schneidbacken 9 und 10 umfaßt. Die beiden Zangenhälften 9,10 sind mittels eines Verbindungsbolzens 3 um dessen Achse 8 - schwenkbar miteinander verbunden, so daß die an den Schneidbacken 9,10 ausgebildeten Schneidkanten 5 und 6 in Bewegungsrichtungen X und Y aufeinander zu bewegbar sind.

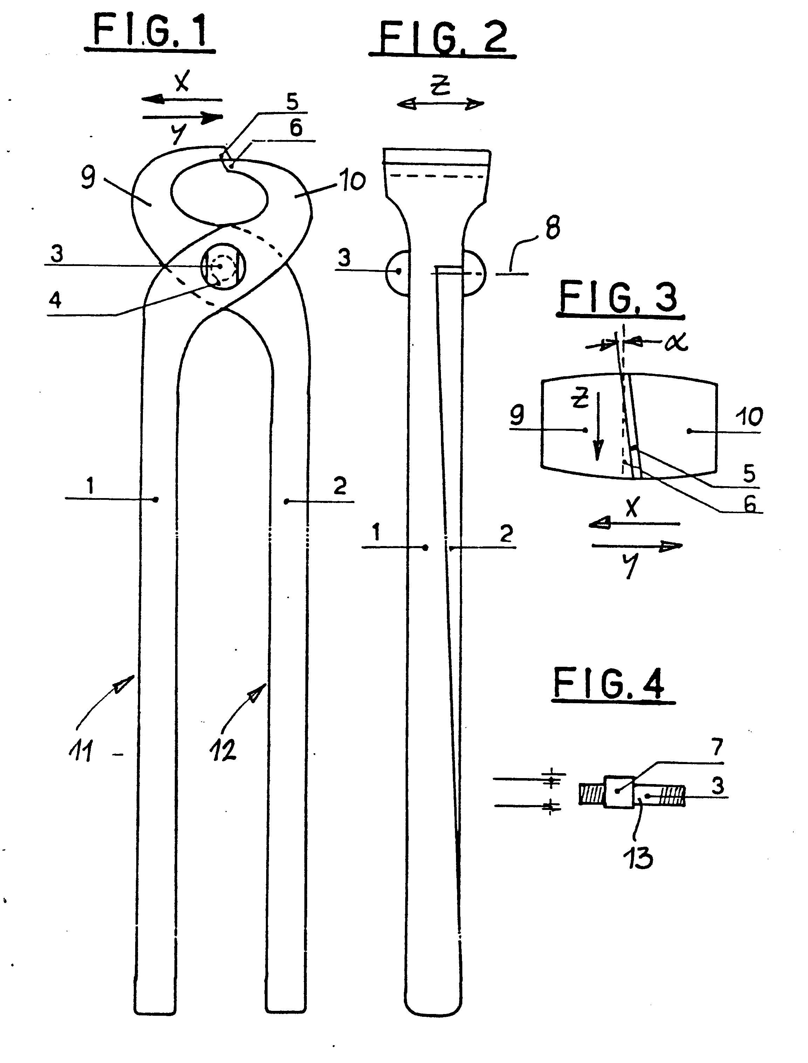

Die Besonderheit der erfindungsgemäßen zangenartigen Vorrichtung besteht nun darin, daß die beiden Schneidbacken 9,10 von der Achse 8 des Verbindungsbolzens 3 einen unterschiedlich großen Abstand aufweisen, wie Fig. 1 zeigt. Bei Gebrauch der Vorrichtung sind deren die Schneidkanten 5,6 tragenden Vorderkanten - sich gegenseitig überlappend - derart aneinander vorbeiführbar, daß die beiden einander zugewandt angeordneten und sich gegenseitig berührenden Schneidkanten 5,6 sich scheren artig aneinander vorbeibewegen. Auf diese Weise kann ein Werkstück, beispielsweise ein Bolzen od. dgl., abgeschert werden, was weniger Kraft erfordert, als dies bei Verwendung einer herkömmlichen Zange der Fall ist, wobei das Werkstück auseinandergekeilt werden muß.

Die Wirkung der erfindungsgemäßen Vorrichtung kann man dadurch verbessern, daß man beide Schneidkanten 5,6 der beiden Schneidbacken 9,10 so anordnet, daß sie zu den Bewegungsrichtungen X,Y der beiden Schneidbacken nicht-rechtwinkelig verlaufen. Dadurch wird die Scherwirkung erhöht und der Schneidvorgang erleichtert.

Noch vorteilhafter ist es, wenn man beispielsweise eine Schneidkante 5 des Schneidbackens 9 zur Schneidkante 6 des Schneidbackens 10 nichtparallel anordnet bzw. ausbildet. Auf diese Weise erfolgt die Zerschneidung eines Werkstücks nicht nur in einer der beiden Bewegungsrichtungen X,Y, sondern auch in Richtung Z, wie Fig. 3 zeigt.

In Fig. 3 ist beispielsweise die erfindungsgemäße zangenartige Vorrichtung so ausgeführt, daß die Schneidkante 6 des Schneidbackens 10 zu den Bewegungsrichtungen X,Y rechtwinkelig verläuft, während die Schneidkante 5 des Schneidbackens 9 hierzu nicht-parallel verlaufend angeordnet ist, das heißt, zu den Bewegungsrichtungen X,Y nicht-rechtwinkelig verläuft. Die beiden Schneidkanten 5,6 sind also in dieser Ausführungsform so angeordnet, daß sie zwischen sich einen spitzen Winkel α einschließen. Der Schneidvorgang ist hierbei eigentlich ein Schervorgang, wobei die Schneiden der beiden Schneidkanten 5,6 nicht auf einmal zum Einsatz kommen, sondern an einem ihrer Enden mit dem Schneiden beginnen und dann kontinuierlich über ihre gesamte Schneidenbreite das Werkstück abscheren. Hierdurch wird der Schneid-bzw. Schervorgang selbst außerordentlich erleiohtert. Außerdem werden durch diese Scherbewegung die Schneidkanten 5,6 geschont, was eine längere Lebensdauer des Werkzeugs zur Folge hat.

Schließlich ist nach der Erfindung noch vorgesehen, daß die Möglichkeit einer Feineinstellung bzw. Nachstellung der Vorrichtung geschaffen werden sollte. Dies erreicht man dadurch, daß man den Verbindungsbolzen 3 nicht, wie üblich, als verniesieht, der etwa das in Fig. 4 gezeigte Aussehen hat: Dieser Bolzen weist beispielsweise einen bezüglich des Bolzenschaftes 13 exzentrisch ausgebildeten Mittelbund, einen Exzenter 7 auf. Wenn man am Bolzenschaft 13 die eine Zangenhälfte 11 und am Exzenter 7 die andere Zangenhälfte 12 lagert, so verändert sich deren relative Lage zueinander dann, wenn man diesen Bolzen 3 um seine Achse 8 dreht. Nach Drehung des Verbindungsbolzens 3 und dadurch erfolgter Feineinstellung der erfindungsgemäßen Vorrichtung wird der Verbindungsbolzen 3 mittels einer lösbaren Einrichtung, beispielsweise mittels einer Schraube 4, in dieser Lage festgelegt.

Die erfindungsgemäße zangenartige Vorrichtung vermag die im Handel erhältlichen Kneif-oder Beißzangen aller Größen voll und ganz zu ersetzen. Sie ist für viele Handwerksbereiche, Heimwerker oder auch Magazine, beispielsweise zur Durchtrennung von Verpackungsbändern, bestens geeignet.

Der Erfindung liegt eine die vorstehend erwähnte Aufgabe ergänzende weitere Aufgabe zugrunde, nämlich eine zangenartige Vorrichtung der eingangs genannten Art zu schaffen, mit der man nicht nur Bleche, Nägel, Kabel, Stahlseile, Bolzen, Drähte, Keramikplatten od. dgl. schneiden, sondern auch Drähte halten, biegen, binden, flechten und ziehen kann, ohne daß diese bei ihrem Erfassen bzw. ihrer Bearbeitung durch die Vorrichtung beschädigt oder gar durchtrennt werden.

Diese Aufgabe wird gemäß der Erfindung dadurch gelöst, daß die Schneidbacke zumindest einer Zangenhälfte in Verlaufsrich tung der Schneidkanten etwa auf halber Länge unterteilt ist, wobei die eine Hälfte als Schneidkante und die andere Hälfte als Halte-Biege-, Binde-, Flecht-oder Ziehkante ausgebildet ist, und daß die Schneidbacke der anderen Zangenhälfte gegebenenfalls mit einer etwa in Verlaufsrichtung der Schneidkanten durchlaufenden Schneidkante versehen ist.

Erfinderische Weiterbildungen und vorteilhafte Ausgestaltungen dieser Variante der erfindungsgemäßen Vorrichtung bzw. Zange ergeben sich aus den Unteransprüchen.

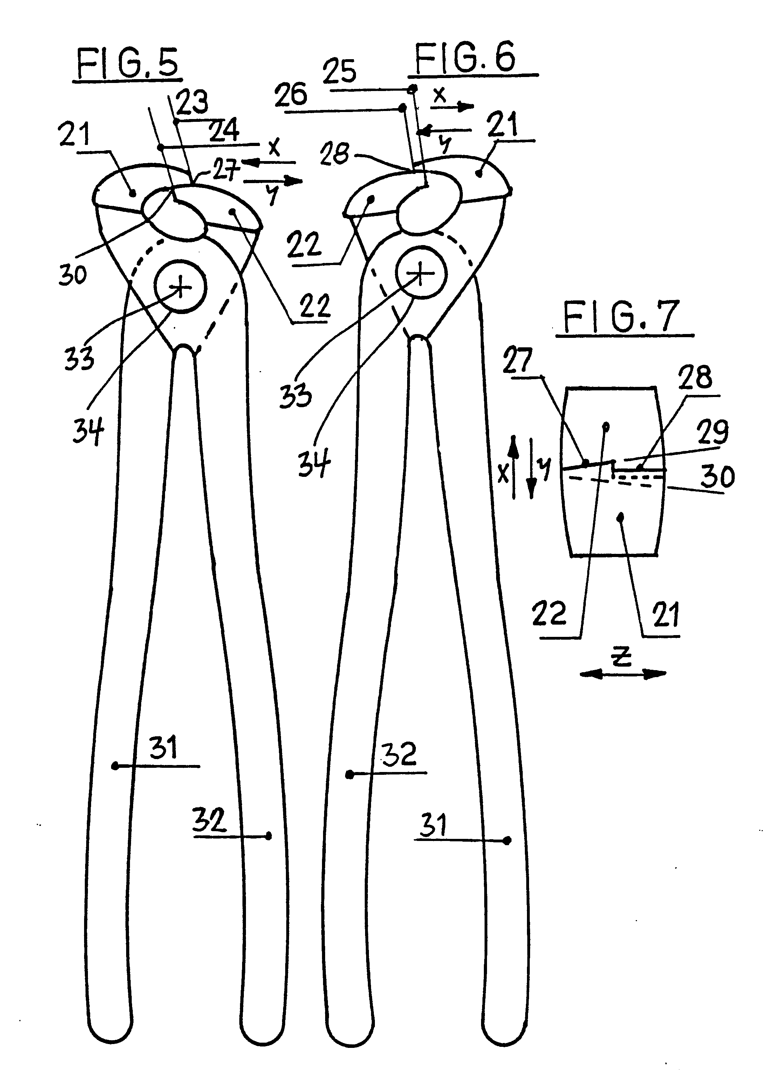

Der konstruktive Aufbau der die zweite Variante darstellenden Vorrichtung bzw. Zange 20 ist, wie die Fig. 5, 6 und 7 zeigen, im wesentlichen der gleiche, wie der der vorstehend beschriebenen ersten Variante der erfindungsgemäßen Vorrichtung bzw. Zange, einschließlich der (hier nicht nochmals beschriebenen) Möglichkeit der Nach-bzw. Feineinstellung der Zange 20.

Fig. 5 zeigt die Zange 20 in Vorderansicht mit ihren beiden durch einen Verbindungsbolzen 34 verbundenen und um dessen Achse 33 herum gegenseitig schwenkbaren Zangenhälften 31,32. Die Zangenhälfte weist eine Schneidbacke 21 auf, die in Gebrauchslage eine Schneidbacke 22 der Zangenhälfte 31 (in der in den Fig. 5,6 gezeichneten Lage) oben übergreift und deren Schneidkante 27 bei Schließen der Zange 20 unter mehr oder weniger intensiver Berührung einer Schneidkante 30 des Schneidbackens 22 über diese hinweggleitet. Die Schneidkanten 27 und 30 der Schneidbacken 21 und 22 verlaufen zu den Bewegungsrichtungen X,Y der letzteren vorzugsweise nicht-rechtwinkelig, wie Fig. 7 zeigt, und zwar etwa längs der Linien 29 und 30. Etwa auf halber Breite der Schneidbacken 21,22 ist zumindest der Schneidbacken 21 der Zangenhälfte 32 derart unterteilt, daß eine Hälfte die Schneidkante 27 bildet, während die andere Hälfte 28 als Halte-, Binde-, Flecht-, Biege-oder Ziehkante ausgebildet ist, mit der - in Zusammenwirken mit der Kante des Schneidbackens 22 -ein Draht erfaßt und entsprechend bearbeitet werden kann, ohne daß dieser dabei zu Schaden kommt oder gar abgeschnitten wird.

Am Schneidbacken 21 ist - auf der Vorderseite (an der Schneideseite) der Zange 20 gemäß Fig. 5 - ein spitzer, scharfer Anschliff 23 vorgesehen, während am Schneidbaccken 22 ebenfalls ein spitzer, scharfer Anschliff 24 ausgebildet ist.

An jeweils einer Hälfte der Schneidbacken 21,22 sind unterschiedliche Schneidetypen eingeschliffen: Ein Anschliff 23 am Schneidbacken 21 und ein Anschliff 24 am Schneidbacken 22 bilden eine spitze Schneidekante 27 und sind - wie Fig. 7 zeigt - nach den Linien 29,30 schräg angeordnet.

Die zweite Hälfte der Schneidbacken 21,22 weist einen stumpfen Schneidewinkel 25,26 in rechtwinkeliger Anordnung auf und bildet so die Halte-, Biege-, Binde-oder Ziehkante 28, wie Fig. 7 zeigt.

Mit der vorstehend beschriebenen Zange 20 lassen sich - in einem einzigen Werkzeug integriert - alle möglichen Materialien leicht und ohne nennenswerten Kraftaufwand problemlos schneiden sowie Drähte bearbeiten (halten, biegen, binden, flechten oder ziehen), ohne daß diese dabei beschädigt werden. Auch lassen sich mittels der Halte-oder Ziehseite der Zange 20 Nägel problemlos ziehen.

Bezugszeichenliste:

Vorrichtung gemäß der Erfindung (erste Variante)

   1 Griffteil der Vorrichtung/Zange (von 11)
   2 Griffteil der Vorrichtung/Zange (von 12)
   3 Verbindungsbolzen (zwischen 11/12)
   4 Schraube (zur Festlegung von 3)
   5 Schneidkante (von 9)
   6 Schneidkante (von 10)
   7 Exzenter (von 3)
   8 Achse (von 3)
   9 Schneidbacken (von 12)
  10 Schneidbacken (von 11)
  11 Zangenhälfte
  12 Zangenhälfte
  13 Bolzenschaft (von 3)
  14

Vorrichtung gemäß der Erfindung (zweite Variante)

  20 Vorrichtung/Zange
  21 Schneidbacke (von 20)
  22 Schneidbacke (von 20)
  23 Anschliff (an 21)
  24 Anschliff (an 22)
  25 Anschliff (an 22)
  26 Anschliff (an 21)
  27 Schneidkante (an 21)
  28 Halte-, Biege-, Binde-, Haltekante (an 21)
  29 Schräge (von 27)
  30 (schrägverlaufende) Schneidkante (an 22)
  31 Zangenhälfte (von 20)
  32 Zangenhälfte (von 20)
  33 Achse (von 34)
  34 Verbindungsbolzen (zwischen 31,32)
  35
  36
  X,Y Bewegungsrichtung (von 21,22)
  Z (etwaige) Verlaufsrichtung (von 27,28,30)

**Ansprüche**

1. Vorrichtung zum Schneiden von Blechen, Nägeln, Kabeln, Bolzen, Drähten, Stahlseilen od. dgl. und gegebenenfalls zum Binden oder Biegen von Drähten mit zwei durch einen Verbindungsbolzen schwenkbar miteinander verbundenen Zangenhälften mit jeweils einem Griffteil und einem eine Schneidkante aufweisenden Schneidbacken, dadurch <u>gekennzeichnet</u>, daß die beiden Schneidbacken (9,10/21,22) von der Achse (8/33) des Verbindungsbolzens (3/34) jeweils unterschiedlich weit entfernt und bei Gebrauch in den Bewegungsrichtungen (X,Y) derart aneinander Vorbeiführbar sind, daß sich ihre beiden einander zugewandt angeordneten und sich gegenseitig berührenden Schneidkanten (5,6/27,30) scherenartig aneinander vorbeibewegen.

2. Vorrichtung nach Anspruch 1, <u>dadurch gekennzeichnet</u>, daß die Schneidkanten (5,6) beider Zangenhälften (11,12) zu den Bewegungsrichtungen (X,Y) nicht-rechtwinkelig verlaufend an den Schneidbacken (9,10) ausgebildet sind.

3. Vorrichtung nach Anspruch 1 oder 2, <u>dadurch gekennzeichnet</u>, daß die Schneidkante (5) eines Schneidbackens (9) zur Schneidkante (6) des anderen Schneidbackens (10) nicht-parallel verlaufend ausgebildet ist.

4. Vorrichtung nach Anspruch 1 oder 3, <u>dadurch gekennzeichnet</u>, daß die Schneidkante (6) der Schneidbacke (10) zu den Schneidrichtungen (X,Y) rechtwinkelig verläuft, und daß die Schneidkante (5) der Schneidbacke (9) zu den Schneidrichtungen (x,Y) nicht-rechtwinkelig verläuft.

5. Vorrichtung nach einem der Ansprüche 1 bis 4, <u>gekennzeichnet</u> durch eine Einrichtung (7) zur Feineinstellung der beiden Schneidkanten (5,6) der Schneidbacken (9,10).

6. Vorrichtung nach Anspruch 5, <u>dadurch gekennzeichnet</u>, daß die Einrichtung (7) ein am Verbindungsbolzen (3) ausgebildeter, in Gebrauchslage lösbar feststellbarer Exzenter (7) ist, durch den die beiden Zangenhälften (11,12) und damit auch deren Schneidkanten (5,6) relativ zueinander verstellbar und in geeigneter Feineinstellung einstellbar sind.

7. Vorrichtung nach Anspruch 1, <u>dadurch gekennzeichnet</u>, daß die Scheidbacke (21) zumindest einer Zangenhälfte (32) in Verlaufsrichtung (Z) der Schneidkanten etwa auf halber Länge derart unterteilt ist, daß eine Hälfte als Schneidkante (27) und die andere Hälfte als Halte-, Biege-, Binde-, Flecht- oder Ziehkante (28) ausgebildet ist, und daß die Scheidbacke (22) der anderen Zangenhälfte (31) mit einer etwa in Verlaufsrichtung (Z) der Schneidkanten der Schneidbacken (21,22) ganz oder teilweise durchlaufenden Schneidkante (30) versehen ist.

8. Vorrichtung nach Anspruch 7, dadurch gekennzeichnet, daß die Scheidbacke (21) nur einer Zangenhälfte (32) in Verlaufsrichtung (Z) der Schneidkanten etwa auf halber Länge derart unterteilt ist, daß deren eine Hälfte als Schneidkante (27) und deren andere Hälfte als Halte-, Biege-, Binde-, Flecht-oder Ziehkante (28) ausgebildet ist, und daß die Schneidbacke (22) der anderen Zangenhälfte (31) mit einer etwa in Verlaufsrichtung (Z) der Schneidkanten der Schneidbacken (21,22) teilweise durchlaufenden Schneidkante (30) versehen ist.

9. Vorrichtung nach Anspruch 7 oder 8, dadurch gekennzeichnet, daß die Schneidkante (27) des Schneidbackens (21) zu den Bewegungsrichtungen (X,y) der Schneidbacken (21,22) nicht-rechtwinkelig verläuft, während die Haltekante (28) des Schneidbackens (21) zu den Bewegungsrichtungen (X,Y) der Schneidbacken (21,22) etwa rechtwinkelig verläuft.

10. Vorrichtung nach einem der Ansprüche 7 bis 9, dadurch gekennzeichnet, daß die Schneidkante (30) der Schneidbacke (21) zu den Bewegungsrichtungen (X,Y) der Schneidbacken (21,22) nicht-rechtwinkelig verläuft.

11. Vorrichtung nach einem der Ansprüche 7 bis 10, dadurch gekennzeichnet, daß die Schneidkanten (27,30) der beiden Schneidbakcen (21,22) - scharfkantig ausgebildet sind, während die Haltekante (28) der Schneidbacke (21) stumpfkantig ausgebildet ist.

0 279 877

FIG. 1  FIG. 2  FIG. 3  FIG. 4

FIG. 5

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | FR-A- 335 068 (ZIELINSKI)<br>* Insgesamt *<br><br>--- | 1 | B 23 D 29/02<br>B 25 B 7/00 |
| Y | FR-A- 628 067 (TAUS)<br>* Insgesamt *<br><br>--- | 1 | |
| A | DE-A-2 412 329 (VAN HEUMEN)<br><br>--- | | |
| A | DE-C- 802 567 (PIEPER)<br><br>--- | | |
| E | DE-A-3 530 573 (ZELGER)<br>* Insgesamt *<br><br>----- | 1-11 | |

**RECHERCHIERTE SACHGEBIETE (Int. Cl.4)**

B 25 B
B 23 D
B 26 B
H 01 R

Der vorliegende Recherchenbericht wurde für alle Patentansprüche erstellt.

| Recherchenort<br>DEN HAAG | Abschlußdatum der Recherche<br>29-10-1987 | Prüfer<br>BERGHMANS H.F. |
|---|---|---|